# EUROPEAN PATENT SPECIFICATION

(11) **EP 2 141 464 B1**
(45) Date of publication and mention of the grant of the patent: **06.11.2013**
(21) Application number: 08751629.0
(22) Date of filing: 25.04.2008
(51) Int. Cl.: G01F 3/22, F23N 5/18, F23N 5/24, G01F 1/66

(54) **FLOW RATE MEASURING DEVICE AND METHOD OF MEASURING FLOW RATE**
DUCHFLUSSMESSVORRICHTUNG UND VERFAHREN ZUR DURCHFLUSSMESSUNG
DISPOSITIF DE MESURE DE DÉBIT ET PROCÉDÉ DE MESURE DU DÉBIT

(30) Priority: 27.04.2007 JP 2007119764; 20.07.2007 JP 2007189656; 07.03.2008 JP 2008058135
(43) Date of publication of application: 06.01.2010
(73) Proprietor: Panasonic Corporation, Kadoma-shi Osaka 571-8501 (JP)
(72) Inventor: BESSYO, Daisuke, Chuo-ku, Osaka-shi, Osaka 540-6207 (JP); MIYATA, Hajime, Chuo-ku, Osaka-shi, Osaka 540-6207 (JP); ITOU, Youichi, Chuo-ku, Osaka-shi, Osaka 540-6207 (JP)
(74) Representative: Schwabe - Sandmair - Marx
(86) International application number: PCT/JP2008/001104
(87) International publication number: WO 2008/136189

(56) References cited:
- EP-A1- 1 881 304
- JP-A- 2000 227 350
- JP-A- 2003 222 548
- JP-A- 2007 024 748
- JP-A- 2007 024 807
- JP-A- 2007 024 813

## Description

### Technical Field

The present invention relates to a technique for identifying an appliance which uses the fluid or leakage by utilization of a change in a flow rate of fluid.

### Background Art

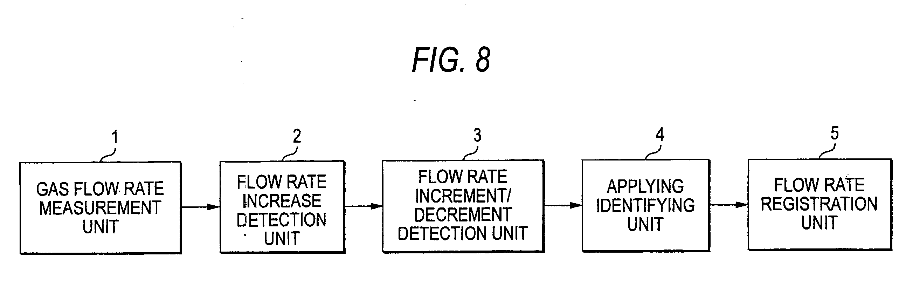

As shown in Fig. 8, a flow rate measuring apparatus of this type has a gas flow rate measurement unit 1 that measures a flow rate of gas flowing in a gas flow passage; a flow rate increase detection unit 2 that detects an increase in flow rate on the basis of a measurement result; a flow rate increment/decrement detection unit 3 that detects an instantaneous incremental/decremental change in gas flow rate according to an increase in flow rate; an appliance identifying unit 4 that determines initiation of use of a new gas combustion appliance when the instantaneous incremental/decremental change is detected; and a flow rate registration unit 5 that registers the increase in gas flow rate detected by the flow rate increase detection unit as an increase in the flow rate of gas arising from initiation of use of the new gas combustion appliance (see; for instance, Patent Document 1).

Attention is paid to the fact that, when use of a new gas combustion appliance is initiated, an instantaneous incremental/decremental change in the flow rate of gas is followed by a stable gas flow rate, initiation of use of a new gas combustion appliance is determined by the above configuration at the time of determination of an incremental/decremental change, thereby enabling determination of initiation of use of a new gas combustion appliance by means of a simple method and registration of an increase in gas flow rate arising from use of the new gas combustion appliance.

However, the related-art configuration encounters a problem of uncertainty about whether an increase in flow rate is induced by an already-existing appliance or as a result of use of a new gas combustion appliance.

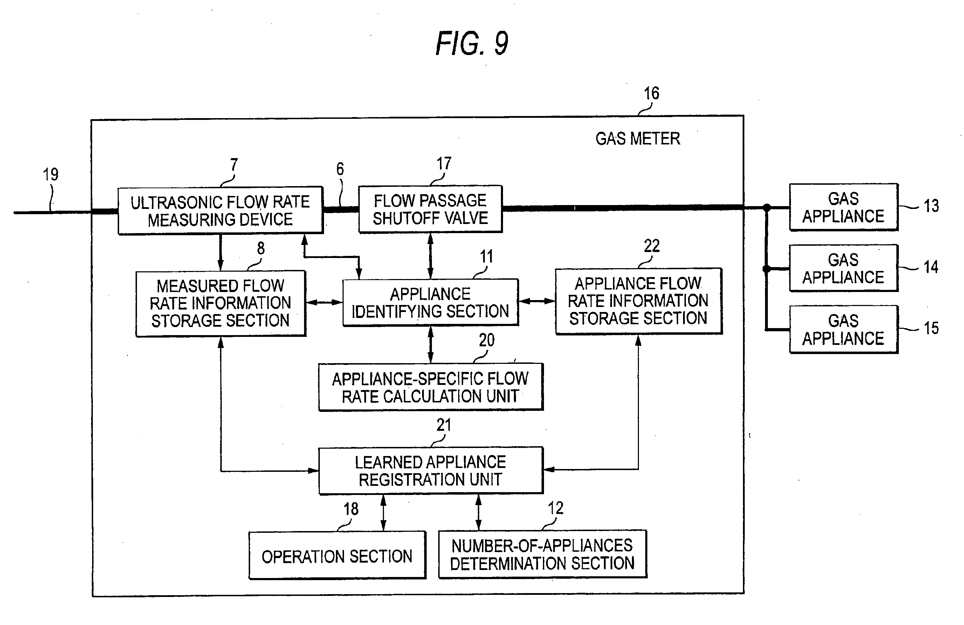

In order to solve this problem, a flow rate measuring apparatus shown in Fig. 9 has an ultrasonic flow rate measuring device 7 serving as a flow rate measurement section that measures a flow rate in a flow passage 6; measured flow rate information storage section 8 that stores a flow rate value of the ultrasonic flow rate measuring device 7 and time information; a learned appliance registration unit 21 that registers measured flow rate information measured for a given period of time as appliance flow rate information; an appliance flow rate information storage section 22 that registers and stores the measured flow rate information; and an appliance identifying section 11 that compares measured flow rate information in the measured flow rate information storage section 8 with appliance flow rate information in the appliance flow rate information storage section 22, thereby identifying an appliance. Reference numeral 12 designates a number-of-appliances determination unit; 13 to 15 designate gas appliances; 16 designates a gas meter serving as a flow rate measuring apparatus; 17 designates a flow passage shutoff valve; 18 designates an operation section; 19 designates a gas pipe line; and 20 designates an appliance-specific flow rate calculation unit (see Patent Document 2).

The flow rate measuring apparatus can store and register measured flow rate information and determine usage states of a plurality of appliances and can specify an appliance to be used, so long as types of the appliances (a hot water supply, a gas cooker, and the like) are registered in advance. At that time, a change in start-up flow rate, an absolute flow rate value, and the like, have hitherto been used as criteria. Patent Document 3 relates to a flowmeter having a tool discrimination means for measuring a flow rate to be used for each tool by discriminating the tool connected to a channel. In this respect, a flowmeter comprises the tool discrimination means for discriminating the usage situation of tools connected to the downstream side of the flowmeter, based on information stored at a tool registration means; and a flow rate measuring means for each tool for calculation, based on the flow rate of fluid used by the tools discriminated by the tool discrimination means, thus discriminating the tools that are used based on the stored flow rate value and time information, calculating the flow rate used by the tools, and hence integrating the flow rate for each tool.

Patent Document 4 relates to a flow measuring instrument provided with an appliance determination means for determining an appliance connected to a flow passage to measure a using flow rate in every appliance. This flow measuring instrument is provided with a started-up appliance determining means for determining the appliance connected to the flow passage to be used, based on an optional specified interval differential flow rate found from a flow rate value measured in every a prescribed time interval by a flow measuring means, and a stopped appliance determining means for determining the use-stopped appliance, based on the specified interval differential flow rate. The instrument can determine precisely the appliance stopped because a selecting appliance range is narrow, since the stopped appliance is determined based on two pieces of information of use starting-up appliance information and flow rate information, by providing an appliance correlating means for determining the stopped appliance out of the appliances determined as the use started-up appliances, with selection based on a stop determination condition, and for correlating the started-up appliance with the stopped appliance.

Patent Document 5 relates to a flow meter which solves the problem that conventional leakage sensing means need various devices other than a flowmeter, causing the system to become large-scale and consequently the versatility is spoiled. In this respect, the main part of the flowmeter which is made to surely determine the leakage comprises the circuit composed of the flow detection means and equipment discrimination means. The operation state of the equipment is determined by the equipment discrimination means, and when the flow is sensed unsuitable to the state, it is determined that there is an abnormality such as a leakage in the piping.

Patent Document 6 describes a flow rate measurement device connected to a household gas supply pipe which includes: flow rate measuring instrument for measuring flow rate in predetermined time intervals; computing unit for obtaining a differential value of flow rate values output from flow rate measuring instrument; appliance information storage; and appliance determining unit for comparing the differential value calculated by computing unit with a start determination value registered in appliance information storage and determining use of an appliance connected downstream of flow rate measuring instrument.

Patent Document 1: JP-A-2002-174542

Patent Document 2: JP-A-2007-024750

Patent Document 3: JP-A-2007-024813

Patent Document 4: JP-A-2007-024807

Patent Document 5: JP-A-2007-024748

Patent Document 6: EP 1 881 304 A

### SUMMARY OF THE INVENTION

The invention is defined by the subject-matter of the independent claims. The dependent claims are directed to advantageous embodiments.

### disclosure of the Invention

### Problem that the Invention is to solve

However, in the above configuration, an appliance is determined through use of a start-up waveform of a flow rate achieved when a gas appliance has initiated use of a gas serving as a fluid or a flow rate value itself. Accordingly, a start-up waveform of the same shape or a waveform of the same flow rate value is acquired, there arises a problem of difficulty being encountered in determining an appliance. Moreover, it has been difficult to determine an operating state of an appliance, much less distinguish usage of an appliance from gas leakage.

The present invention has been conceived to solve the aforementioned drawback and aims at providing a technique for identifying an appliance which uses the fluid or leakage with high precision by utilization of a change in the flow rate of a fluid.

### Means for Solving the Problem

A flow rate measuring apparatus of the present invention has a flow rate measurement section that measures a flow rate of a fluid flowing in a flow passage; a flow rate information storage section that stores a flow rate value measured by the flow rate measurement section; a measured flow rate value difference calculation section that calculates a measured flow rate value difference within a predetermined period corresponding to an amount of change occurred in a measured flow rate value; and an appliance identifying section that identifies an appliance which uses the fluid or leakage by determining whether or not the measured flow rate value difference is a predetermined threshold or less;
wherein the measured flow rate value difference is achieved in the middle of stable operation of a connectable gas appliance;
the measured flow rate value difference is a per-measurement flow rate value difference corresponding to an amount of change occurred in a measured flow rate value every time the flow rate measurement section performs measurement; and the appliance identifying section is configured to identify an appliance which uses the fluid or leakage based on an integrated frequency at which the per-measurement flow rate value difference is the threshold or less, wherein the integrated frequency is calculated by either one of the continual number of times a per-measurement flow rate value difference is smaller than the threshold, or the number of times out of a predetermined number of times a pre-measurement flow rate value is smaller than the threshold, wherein the number is acquired by the appliance identifying section.

According to the present invention, an appliance which uses the fluid can be identified from a viewpoint of the value difference in a measured flow rate value, whereby a novel method, such as an appliance identification, is provided. Moreover, a higher-precision appliance identifying method, and the like, is provided by combination of the present invention with an existing method.

Moreover, in the flow rate measuring apparatus of the present invention, the measured flow rate value difference can be defined as an overall-period measured flow rate value difference corresponding to an amount of change occurred in a measured flow rate value over an entirety of the predetermined period; and the appliance identifying section identifies an appliance which uses the fluid or leakage based on whether or not the overall-period measured flow rate value difference is the threshold or less.

According to the configuration, an amount of change occurred in a measured flow rate value over a predetermined period is used; hence, a novel method, such as appliance identification, is provided, and a higher-precision appliance identification method, and the like, is provided.

Furthermore, in the flow rate measuring apparatus of the present invention, the predetermined period can be defined as a period from initiation of operation of the appliance until stoppage of operation of the same or a portion of a period from initiation of operation of the appliance until stoppage of operation of the same. The portion of period can also be a time achieved in the middle of stable operation of the appliance.

According to the configuration, an optimum flow rate measurement time or timing can be selected according to the type of an appliance.

According to the present invention, it is possible to identify an appliance which uses the fluid and also to determine an operating state of the appliance from the viewpoint of the measured flow rate value difference. The present invention can also be applied to another technique, such as enhancement of maintenance.

Moreover, according to the present invention, a flow rate measurement method performed by the flow rate measuring apparatus is provided. Further, a fluid supply system using the apparatus, the method, and a program is provided.

### Advantage of the Invention

According to the present invention, a novel method for identifying an appliance, determining an operating state of the appliance, and distinguishing usage of the appliance from gas leakage is provided. A higher-precision appliance identifying method, an appliance operating state determination method, and a method for distinguishing usage of an appliance from gas leakage are provided.

### Brief Description of the Drawings

Fig. 1 is a block diagram of a flow rate measuring apparatus according to the present invention.
Fig. 2 is a graph conceptually showing a change in flow rate of a gas appliance.
Figs. 3(a) and 3(b) are conceptual graphs rendering for determining whether or not a value difference in measured flow rate value acquired every measurement during stable operation of a gas appliance is a predetermined threshold or less; in other words, a view acquired when the value difference in flow rate value is small.
Figs. 4(a) and 4(b) are conceptual graphs rendering for determining whether or not the value difference in measured flow rate value acquired every measurement during stable operation of a gas appliance is a predetermined threshold or less, or a view acquired when the value difference in flow rate value is great.
Fig. 5 is a conceptual rendering for determining whether or not the value difference in flow rate value measured by twice measurement operations is a predetermined threshold or less in the middle of stable operation of a gas appliance.
Figs. 6(a) and 6(b) are views showing a change in flow rate achieved in an operation mixedly including cases where the measured flow rate value difference exceeds the threshold and cases where the same does not exceed the threshold.
Figs. 7(a) and 7(b) are conceptual graphs rendering for determining whether or not the value difference in measured flow rate value arising during stable operation of a gas appliance and throughout the entirety of a predetermined period is a predetermined threshold or less.
Fig. 8 is a block diagram of a related-art flow rate measuring apparatus.
Fig. 9 is a block diagram of another related-art flow rate measuring apparatus.

### Best Mode for Implementing the Invention

An embodiment of the present invention will hereinafter be described by reference to the drawings.

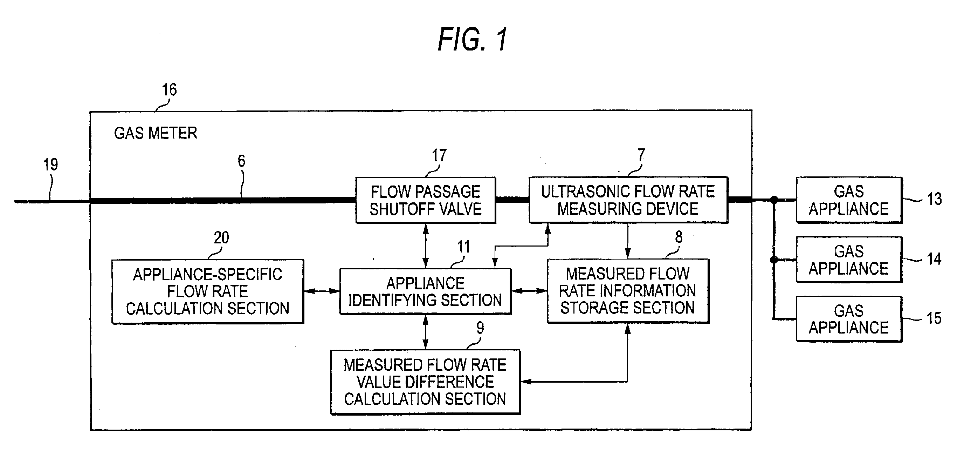

Fig. 1 shows a block diagram of a gas meter 16 working as a flow rate measuring apparatus according to the present invention.

In Fig. 1, the gas meter 16 has a flow passage 6, an ultrasonic flow rate measuring device 7, a measured flow rate information storage section 8, a measured flow rate value difference calculation section 9, and an appliance identifying section 11. The gas meter 16 is disposed in the flow passage 6 and includes a flow passage shutoff valve 17 for shutting off gas in the event of emergency and an appliance-specific flow rate calculation section 20.

The ultrasonic flow rate measuring device 7 measures a flow rate of gas serving as a fluid that flows in the flow passage 6 by emitting an ultrasonic wave to the gas, and a common ultrasonic flow measurement device can be used. The measured flow rate information storage section 8 stores object data that describe a flow rate value measured by the ultrasonic flow rate measuring device 7 and a measurement time during which the flow rate value has been measured while associating them with each other.

As will be described later, the measured flow rate value difference calculation section 9 calculates the value difference corresponding to a change in the measured flow rate value of the object data stored in the measured flow rate information storage section 8 (i.e., the measured flow rate value difference). As will be described later, the value difference includes 1) a per-measurement flow rate value difference corresponding to the amount of a change in measured flow rate value acquired every time the ultrasonic flow rate measuring device 7 performs measurement; 2) an overall-period measured flow rate value difference (i.e., the amount of change in absolute value) corresponding to the amount of change in measured flow rate value achieved over an entire predetermined period; and the like.

As will be described later, the appliance identifying section 11 identifies, from a result of a determination about whether the aforementioned value difference is a predetermined threshold or less, whether the change is caused by a gas appliance which uses the fluid or by leakage. The appliance-specific flow rate calculation section 20 calculates a flow rate of each gas appliance identified by the appliance identifying section 11. The gas meter 16 is connected to a gas pipe line 19 at an upstream position and connected to various gas appliances 13, 14, and 15, such as a gas cooker, a fan heater, and a floor heater, at downstream positions.

Operation and action of the above-configured flow rate measuring apparatus are described while attention.is paid particularly on operation and action of the measured flow rate value difference calculation section 9 and the appliance identifying section 11.

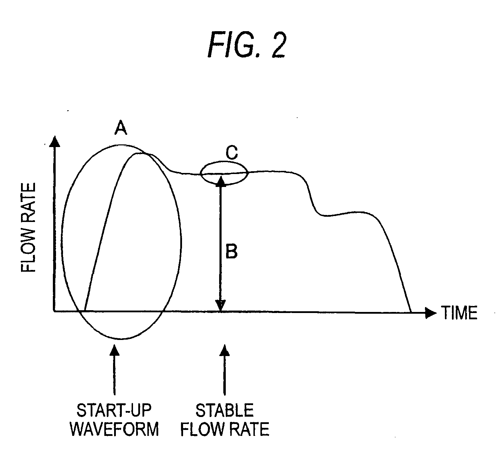

Fig. 2 is a graph conceptually showing a change in the flow rate of the gas flowing in the gas meter 16 that results from use of a gas appliance and that is measured by the ultrasonic flow rate measuring device 7. The flow rate is stored in the measured flow rate information storage section 8 in the form of object data associated with a measurement time (namely in the form of this graph). For instance, when the flow rate measured by the ultrasonic flow rate measuring device 7 has changed from zero to a predetermined amount, one appliance is determined to have started operating. The measured flow rate information storage section 8 starts storing an hourly change in measured flow rate acquired at this time as a measured flow rate value. Specifically, the measured flow rate information storage section 8 stores, as object data, a flow rate value measured at a predetermined measurement time interval (e.g., every two seconds) while associating the flow rate value with a measurement time began from a time when a change occurred.

A waveform of a flow rate shown in Fig. 2 generally varies from one gas appliance to another. Accordingly, a method for determining a gas appliance from such a waveform has hitherto been known. Although there are various determination methods, a known method is to determine a gas appliance by use of; for instance, a start-up waveform of a flow rate indicated by an area A and a flow rate value acquired in the middle of stable operation of the gas appliance indicated by an area B (operation performed at a time when a flow rate value achieved after start-up operation becomes substantially stable). However, in relation to some gas appliances, start-up waveforms of substantially-identical shape and waveforms of substantially-identical flow rate value are often appear. In such a case, difficulty is encountered in determining a gas appliance. Moreover, when gas leakage substantially identical with a gas appliance in terms of the quantity of flow is present, it becomes difficult to distinguish use of an appliance from gas leakage.

In the present invention, attention is paid to a point differing from the shape of a waveform or a flow rate value. Specifically, the gas meter of the present invention determines a gas appliance used or leakage from the value difference in flow rate value representing the amount of change in a gas flow rate value (the measured flow rate value difference). In the following embodiment, there is introduced an example for distinguishing a gas appliance from leakage by observing an area C in Fig. 2; namely, the value difference (a change in flow rate value) achieved in the middle of stable operation of a gas appliance.

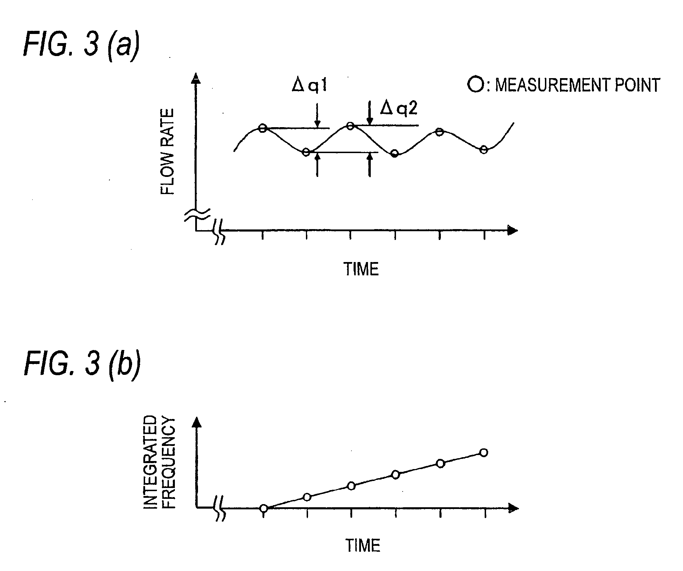

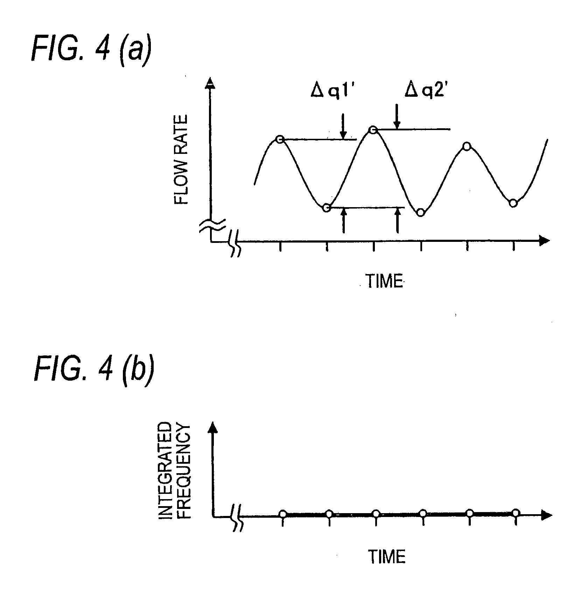

Figs. 3(a) to 4(b) show examples for determining a gas appliance by use of the value difference in measured flow rate value acquired for each measurement corresponding to the amount of change in a measured flow rate value acquired by the ultrasonic flow rate measuring device 7 for each measurement. Figs. 3(a) and 3(b) show that such a per-measurement flow rate value difference is smaller (than a predetermined threshold), and Figs. 4(a) and 4(b) show that such a per-measurement flow rate value difference is greater (than a predetermined threshold).

Fig. 3(a) shows a graph of a measurement time and a measured flow rate value that are acquired by the ultrasonic flow rate measuring device 7 for each measurement. Data showing a combination of such a measurement time and such a measured flow rate value (object data) are stored in the measured flow rate information storage section 8 that is predetermined memory.

The measured flow rate value difference calculation section 9 calculates a measured flow rate value difference corresponding to the amount of change in measured flow rate value within a predetermined period of time. In particular, in the present embodiment, the measured flow rate value difference calculation section 9 calculates, as the measured flow rate value difference, the amount of change in measured flow rate value for each measurement performed by the ultrasonic flow rate measuring device 7 (the.per-measurement flow rate value difference) within a predetermined period of time indicated by C. In Fig. 3(a), the per-measurement flow rate value difference is Δq1, Δq2, ..., Δqi.

The appliance identifying section 11 identifies a gas appliance that uses gas by determining whether or not the measured flow rate value difference is a predetermined threshold Δqm or less. In the present embodiment, the appliance identifying section 11 identifies a gas appliance on the basis of the number of times the per-measurement flow rate value differences (Δq1, Δq2, ..., Δqi) are continually calculated as being a predetermined threshold Δqm or less by the measured flow rate value difference calculation section 9. The threshold Δqm is given as a unique value difference for each gas appliance and stored in unillustrated memory (a threshold storage section).

Fig. 3(b) is a graph showing, as an integrated frequency, the continual number of times a per-measurement flow rate value difference smaller than the predetermined threshold Δqm is calculated, wherein the number is acquired by the appliance identifying section 11. Fig. 3(b) shows that the per-measurement flow rate value difference is the threshold Δqm or less continually five times within the predetermined period C (|Δqi|<Δqm). When the per-measurement flow rate value difference that is the threshold or less is continually acquired five times as mentioned above, the appliance identifying section 11 identifies the gas appliance being used as a specific gas appliance (e.g., a fan heater).

Figs. 4(a) and 4(b) are analogous to Figs. 3(a) and 3(b). As shown in Fig. 4(a), an example in which the per-measurement flow rate value differences Δq1', Δq2', ..., Δqi' calculated by the measured flow rate value difference calculation section 9 are greater than Δq1, Δq2, ..., Δqi shown in Fig. 3 (a); namely, an example of great variations in gas flow rate value. Since all of the per-measurement flow rate value differences Δq1', Δq2' ,..., Δqi' are greater than the threshold Δqm (|Δqi'|≥Δqm), the integrated frequency still remains zero as shown in Fig. 4(b). When the per-measurement flow rate value difference equal to or greater than the threshold is continually obtained five times as mentioned above, the appliance identifying section 11 identifies the gas appliance being used as a specific gas appliance (e.g., a hot water supply).

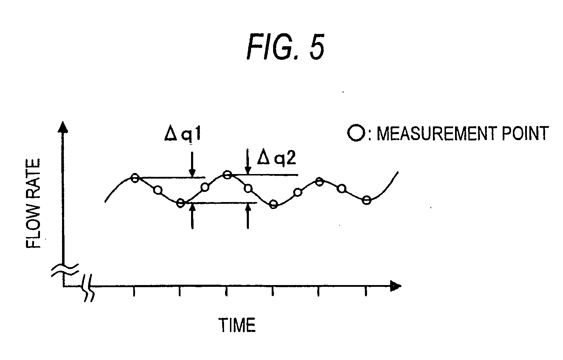

The embodiments shown in Figs. 3(a) to 4(b) provide examples in which fluctuations in flow rate are repeated every time measurement is performed. However, the flow rate does not always exhibit such a behavior. Even in a case differing from the embodiments shown in Figs. 3(a) to 4(b), data acquired on a per-measurement basis can be used. However, when a continual increase arises in a flow rate, data acquired before the flow rate next turns to a decrease can be considered as a measurement unit. Alternatively, when a continual decrease arises in a flow rate, data acquired before the flow rate next turns into an increase can be considered as a measurement unit. For instance, in an embodiment shown in Fig. 5, fluctuations in flow rate are not repeated for each measurement but every two measurement operations. In such a case, the appliance identifying section 11 perceives an aggregate amount of flow rate continually increased during two measurement operations or an aggregate amount of flow rate continually decreased during two measurement operations as per-measurement flow rate value differences Δq1", Δq2", ..., Δqi". The per-measurement flow rate value differences are compared with the threshold Δqm, whereby integrated frequencies, such as those shown in Fig. 4(b), can be acquired. The word "measurement-by-measurement" in the "per-measurement flow rate value difference" can also be considered as a predetermined unit time for perceiving the value difference and can also be considered as actual one measurement operation of the ultrasonic flow rate measuring device 7.

Although the drawings illustrate data acquired every two measurement operations, various situations arise; for instance, actually fluctuations arise three times or only one time. Specifically, the aforementioned descriptions are provided on condition that the timing at which the value difference is determined is a given cycle. However, the present invention is not limited to such a mode. For instance, a difference between the maximum flow rate and the minimum flow rate acquired in a period during which the flow rate increases or decreases can also be compared with a threshold. In general, a time during which the flow rate continually increases or a time during which the flow rate continually decreases is not constant. In such a case, a predetermined period during which the flow rate is detected in order to calculate the measured flow rate value difference; namely, a detection time, is not fixed to a given time but various from time to time.

In the embodiment shown in Figs. 3(a) to 4(b), the appliance identifying section 11 is arranged so as to identify a gas appliance being used on the basis of the continual number of times per-measurement flow rate value difference of a threshold or less is acquired. The continual number of times is set to five in the above descriptions. However, the continual number of times is arbitrary.

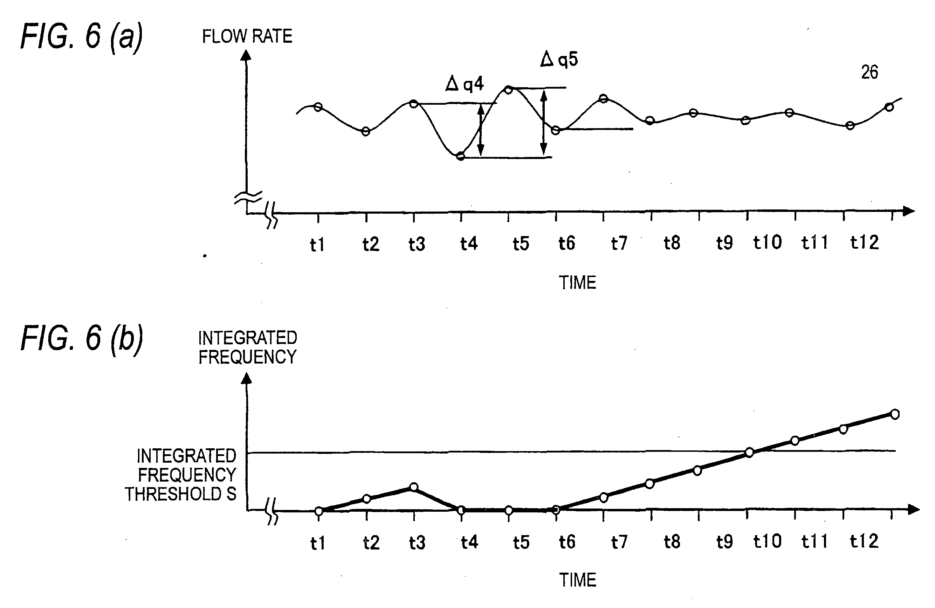

An actual operating time of an appliance; namely, a predetermined time, is long, and cases shown in Figs. 3(a) to 4(b) may mixedly arise. In such a case, when the measured flow rate value difference has come to the threshold or more, the appliance identifying section 11 can be arranged so as to temporarily reset an integrated frequency counter and resume counting of an integrated frequency at a time point when the count has again become smaller than the threshold. For instance, as shown in Fig. 6(a), widths Δq4 and Δq5 exceed the predetermined threshold Δqm in an embodiment shown in Figs. 6(a) and 6(b). As shown in Fig. 6(b), the integrated frequency counter is reset at points in time t4 and t5, and counting of the integrated frequency is resumed from a time point t6. In relation to a criterion, a determination can also be made based on a ratio of occurrences of a case where the number of continual integrated frequencies exceeds a predetermined value to occurrences of a case where the same does not exceed the predetermined value.

Alternatively, in addition to application of the continual number of times, application of another indicator is also possible. For instance, the appliance identifying section 11 can also identify a gas appliance on the basis of a frequency at which the per-measurement flow rate value difference of a predetermined threshold or less appears. The following indicators can also be employed; for instance, an indicator suggesting that a gas appliance is identified as a fan heater when six out of ten value differences are the threshold or less, an indicator suggesting that a gas appliance is identified as a hot water supply when only two out of the ten value differences are the threshold or less.

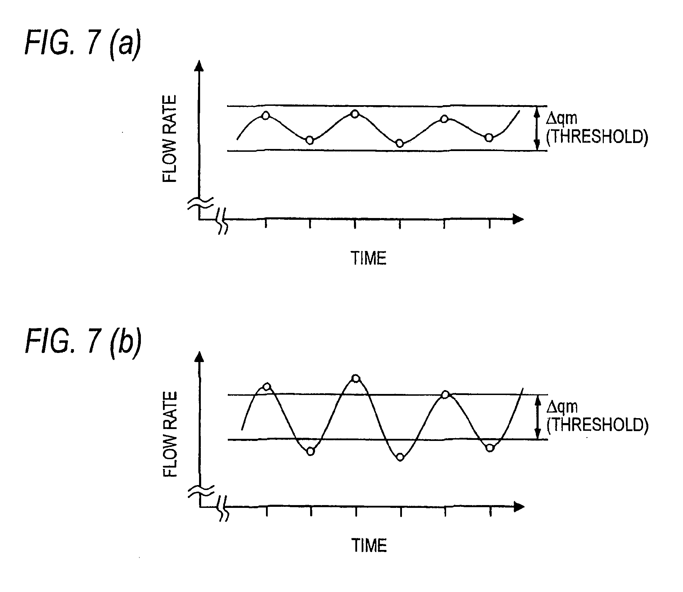

In contrast with the embodiment shown in Figs. 3(a) to 4(b), an embodiment shown in Figs. 7(a) and 7(b) is a case of use of an overall-period measured flow rate value difference corresponding to the amount of change in measured flow rate value achieved during stable operation of a gas appliance over an entire predetermined period (i.e., the amount of change in absolute value). Specifically, after a flow rate value measured over the entirety of the predetermined period B has been stored in the measured flow rate value information storage section 8, an overall-period measured flow rate value difference Δq that is a value difference in all measured flow rate values is calculated by the measured flow rate value difference calculation section 9.

As shown in Fig. 7(a), when the overall-period measured flow rate value difference Δq is smaller than the predetermined threshold Δqm, the appliance identifying section 11 identifies a gas appliance being used as; for instance, a specific gas appliance (e.g., a fan heater). Meanwhile, when the overall-period measured flow rate value difference Δq is greater than the predetermined threshold Δqm as shown in Fig. 7(b), the appliance identifying section 11 identifies a gas appliance being used as; for instance, a specific gas appliance (e.g., a hot water supply). An actual operating time of an appliance; namely, a predetermined time, is long, and cases shown in Figs. 7(a) and (b) may mixedly arise. In such a case, an identification can also be made based on a ratio between the cases.

In the embodiments shown in Figs. 3(a) through 7(b), a predetermined period during which there is acquired a measured flow rate value serving as a basis for determining the value difference is taken as C representing a time during which a gas appliance stably operates. However, the predetermined period may also be another portion of a period from initiation of operation of a gas appliance to stoppage of operation of the same. Further, the predetermined period may also be a period from initiation of operation of a gas appliance to stoppage of operation of the same.

In the foregoing embodiments, a gas appliance being used is identified by use of the measured flow rate value difference. However, identification of operating state of a specific gas appliance as well as identification of a gas appliance become possible by application of the present invention. For instance, the value difference of a single appliance, such as the gas cooker, sometimes changes between where a gas cooker is normally performing combustion after started operation and where the gas cooker is not normally performing combustion (where incomplete combustion or a flame failure has occurred), as shown in Figs. 3(a) to 4(b). Moreover, the value difference varies as shown in Figs. 7(a) and 7(b). It becomes possible to determine whether or not the gas appliance is normally operating or identify the nature of operation by capturing these fluctuations in the value difference. Such identification can be applied to; for instance, safety maintenance inspection of a gas appliance. In this case, the appliance identifying section 11 works as an appliance operating status determination section that determines an operating state of a gas appliance.

In the embodiment, a gas appliance being used is identified by use of the measured flow rate value difference. However, it also becomes possible to determine an operating state of a specific gas appliance as well as to identify a gas appliance by application of the present invention. For instance, the value difference in a single appliance, such as a hot water supply, sometimes varies between where the hot water supply is performing combustion at a great flow rate after starting operation and where the same is performing combustion at a small flow rate. It becomes possible to determine whether or not the gas appliance is performing combustion at a great flow rate or a small flow rate by capturing these fluctuations in the value difference. The determination can be applied to; for instance, safety maintenance inspection of a gas appliance. In this case, the appliance identifying section 11 works as an appliance operating state determination section that determines an operating state of a gas appliance.

In the aforementioned embodiment, a gas appliance being used is identified by use of the measured flow rate value difference. However, it also becomes possible to distinguish usage of a gas appliance from gas leakage as well as to identify a gas appliance by application of the present invention. For instance, the value difference sometimes varies between where the gas appliance is normally performing combustion and where gas substantially identical in quantity with the gas used by the gas appliance is still leaking, as shown in Figs. 3(a) to 4(b). Moreover, the value difference varies as shown in Figs. 7(a) and 7(b). It becomes possible to determine whether the gas appliance is being used or gas is leaking, by capturing these fluctuations in the value difference. In general, a narrow value difference corresponds to the case of leakage. In this case, the appliance identifying section 11 distinguishes usage of an appliance from gas leakage. The determination can be applied to; for instance, safety maintenance inspection of gas leakage.

In the embodiment, the continual number of times the per-measurement flow rate value difference of the predetermined threshold Δqm or less is calculated, which is obtained by the appliance identifying section 11, is taken as an integrated frequency. However, the continual number of times the per-measurement flow rate value difference of the predetermined threshold Δqm or more is calculated, which is obtained by the appliance identifying section 11, can also be taken as an integrated frequency.

In general, since gas leakage is not accompanied by a flow rate fluctuation factor, such as combustion, gas leakage is assumed to entail a comparatively-narrow value difference in flow rate and hence can be distinguished from a gas appliance. Above all, a hot water supply that instantaneously performs gas flow rate control entails a wide value difference of flow rate change and can be distinguished from leakage more clearly.

With regard to the identification utilizing the threshold described in connection with the present patent application, classifying a state into two categories by means of a threshold is important. Therefore, when a state matches a threshold, the essential requirement for determining which one of the two categories applies to the state is to make a determination, as required, according to an objective.

In order to implement the flow rate measurement method, such as that mentioned above, a program for carrying out processing pertaining to respective steps of the flow rate measurement method is stored in the appliance identifying section 11 or an unillustrated computer (an arithmetic-logic unit) of the gas meter 16. Further, the present invention also encompasses the flow rate measuring apparatus of the present invention, the flow rate measurement method of the same, and a fluid supply system including a fluid (gas) supply source that uses a program to be.executed by a computer.

The above descriptions are directed to a case where the ultrasonic flow rate measuring apparatus is used. However, it is manifest that similar advantages are yielded by another instantaneous flow rate measuring apparatus. Explanations about processing to be performed after identification of an appliance or determination of leakage are omitted. However, in the gas meter, it is obvious that setting an appliance-specific charge on the basis of measurement of an integrated flow rate for each of groups categorized according to registered appliances or setting an appliance-specific maintenance function for safety management (safety maintenance function) for each of groups categorized according to registered appliances is possible. Further, in the case of gas leakage, it is manifest that maintenance processing, such as a report, shutoff of gas, or a combination thereof, is also possible. Further, so long as a gas meter and a gas appliance can be equipped with a transceiver, such as a wireless device, expectation of further enhanced identification of an appliance or determination of leakage is evident. Although the descriptions are provided by means of the gas meter and the gas appliances, the present invention can also be used similarly for grouping appliances to be used, which are connected to positions downstream of the flow rate measuring apparatus, even in the case of an industrial flow rate measuring apparatus or a water meter.

The present patent application is based on Japanese Patent Application No. 2007-119764 filed on April 27, 2007; Japanese Patent Application No. 2007-189656 filed on July 20, 2007; and Japanese Patent Application No. 2008-058135 5 filed on March 7, 2008.

Although the embodiments of the present invention have been described thus far, the present invention is not limited to matters provided in the embodiments, and modifications and applications of the invention which will be made by those skilled in the art on the basis of the descriptions of the specification and the known arts are also intended and conceived to fall within the scope of protection to be sought.

### Industrial Applicability

As mentioned above, the present invention makes it possible to identify an appliance which uses the fluid from the viewpoint of the value difference in flow rate value, and a new method, such as an appliance identification, is provided. Further, a technique which will serve as a basis for a more-precise appliance identification method, and the like, is provided.

## Claims

1. A flow rate measuring apparatus (16) comprising:
a flow rate measurement section (7) configured to measure a flow rate of a fluid flowing in a flow passage (6);
a flow rate information storage section (8) configured to store a measured flow rate value measured by the flow rate measurement section (7);
a measured flow rate value difference calculation section (9) configured to calculate a measured flow rate value difference within a predetermined period, wherein
the measured flow rate value difference corresponds to an amount of change occurred in the measured flow rate value; and
an appliance identifying section (11) allowing for identifying an appliance (13 to 15) which uses the fluid or leakage by configuring said appliance identifying section (11) to determine whether or not the measured flow rate value difference is a predetermined threshold or less;
wherein the measured flow rate value difference is achieved in the middle of stable operation of a connectable gas appliance (13 to 15);
**characterized in that**:
the measured flow rate value difference is a per-measurement flow rate value difference corresponding to an amount of change occurred in a measured flow rate value every time the flow rate measurement section (7) performs measurement; and
the appliance identifying section (11) is configured to identify an appliance (13 to 15) which uses the fluid or leakage based on an integrated frequency at which the per-measurement flow rate value difference is the threshold or less, wherein the integrated frequency is calculated by either one of the continual number of times a per-measurement flow rate value difference is smaller than the threshold, or the number of times out of a predetermined number of times a pre-measurement flow rate value is smaller than the threshold, wherein the number is acquired by the appliance identifying section (11).

2. The flow rate measuring apparatus (16) according to claim 1, wherein the measured flow rate value difference is an overall-period measured flow rate value difference corresponding to an amount of change occurred in a measured flow rate value over an entirety of the predetermined period; and
the appliance identifying section (11) identifies an appliance (13 to 15) which uses the fluid or leakage based on whether or not the overall-period measured flow rate value difference is the threshold or less.

3. The flow rate measuring apparatus (16) according to claim 1 or 2, wherein the predetermined period is a period from initiation of operation of the appliance (13 to 15) until stoppage of operation of the same.

4. The flow rate measuring apparatus (16) according to any one of claims 1 to 3, wherein the predetermined period is a portion of a period from initiation of operation of the appliance (13 to 15) until stoppage of operation of the same.

5. The flow rate measuring apparatus (16) according to claim 1, further comprising:
an appliance operation state determination section that determines an operating state of an appliance which uses the fluid, by determining whether or not the measured flow rate value difference is a predetermined threshold or less.

6. A fluid supply system comprising the flow rate measuring apparatus (16) according to any one of claims 1 to 5.

7. A flow rate measuring method comprising:
a step of measuring a flow rate of a fluid flowing in a flow passage (6);
a step of storing a measured flow rate value;
a step of calculating a measured flow rate value difference within a predetermined period, wherein
the measured flow rate value difference corresponds to an amount of change occurred in a measured flow rate value;
a step of identifying an appliance (13 to 15) which uses the fluid or leakage by determining whether or not the measured flow rate value difference is a predetermined threshold or less; and
achieving the measured flow rate value difference in the middle of stable operation of the gas appliance (13 to 15);
**characterized in that**:
the measured flow rate value difference is a per-measurement flow rate value difference corresponding to an amount of change occurred in a measured flow rate value every time the flow rate measurement step is performed; and
identifying in the step of identifying an appliance (13 to 15), an appliance (13 to 15) which uses the fluid or leakage based on an integrated frequency at which the per-measurement flow rate value difference is the threshold or less, wherein the integrated frequency is calculated by either one of the continual number of times a per-measurement flow rate value difference is smaller than the threshold, or the number of times out of a predetermined number of times a pre-measurement flow rate value is smaller than the threshold, wherein the number is acquired by an appliance identifying section.

8. A program being used by computer that controls a flow rate measuring apparatus (16) to execute all of the steps of the method according to claim 7.

## Patentansprüche

1. Flussratenmessvorrichtung (16), die aufweist:
einen Flussratenmessabschnitt (7), der konfiguriert ist, um eine Flussrate eines Fluids zu messen, welches in einer Flusspassage (6) fließt;
ein Flussrateninformationsspeicherabschnitt (8), der konfiguriert ist, um einen gemessenen Flussratenwert zu speichern, der durch den Flussratenmessabschnitt (7) gemessen wurde;
einen Berechnungsabschnitt (9) für eine gemessene Flussratenwertdifferenz, der konfiguriert ist, um eine gemessene Flussratenwertdifferenz innerhalb einer vorbestimmten Periode zu berechnen, wobei
die gemessene Flussratenwertdifferenz einer Umfangsänderung bzw. Mengenänderung entspricht, die in dem gemessenen Flussratenwert stattfindet bzw. stattfand; und
einen Apparatidentifizierungsabschnitt (11), um die Identifizierung eines Apparates (13 bis 15) zu ermöglichen, welcher das Fluid verwendet oder eine Leckage, indem der Apparatidentifizierungsabschnitt (11) konfiguriert ist bzw. wird, um zu bestimmen, ob oder ob nicht die gemessene Flussratenwertdifferenz ein vorbestimmter Schwellenwert oder kleiner bzw. geringer ist;
wobei die gemessene Flussratenwertdifferenz in der Mitte der stabilen Operation bzw. des stabilen Betriebes eines anschließbaren bzw. verbindbaren Gasapparates (13 bis 15) erreicht ist;
**dadurch gekennzeichnet, dass**:
die gemessene Flussratenwertdifferenz eine vorgemessene Flussratenwertdifferenz ist, die einer Umfangsänderung bzw. Mengenänderung entspricht, die in einem gemessenen Flussratenwert stattfindet bzw. stattfand, und zwar jedes Mal, wenn der Flussratenmessabschnitt (7) eine Messung durchführt; und
der Apparatidentifizierungsabschnitt (11) konfiguriert ist, um einen Apparat (13 bis 15), welcher das Fluid verwendet oder eine Leckage zu identifizieren, und zwar basierend auf einer integrierten Frequenz bei welcher die vorgemessene Flussratenwertdifferenz der Schwellenwert oder kleiner bzw. geringer ist, wobei die integrierte Frequenz berechnet ist bzw. wird, und zwar mit entweder einer der beständigen bzw. fortwährenden Anzahl von Malen bzw. Zeiten bei denen ein vorgemessener Flussratenwertdifferenz kleiner bzw. geringer als der Schwellenwert ist, oder der Anzahl von Malen bzw. Zeiten von bzw. aus einer vorbestimmten Anzahl von Malen bzw. Zeiten bei denen ein vorgemessener Flussratenwert kleiner bzw. geringer als der Schwellenwert ist, wobei die Anzahl durch den Apparatidentifizierungsabschnitt (11) erfasst ist.

2. Flussratenmessvorrichtung (16) nach Anspruch 1, wobei die gemessene Flussratenwertdifferenz eine gemessene Flussratenwertdifferenz einer Gesamtperiode ist, die zu einer Umfangsänderung bzw. Mengenänderung korrespondiert, die in einem gemessenen Flussratenwert stattfindet bzw. stattfand, und zwar über eine ganze vorbestimmte Periode; und
der Apparatidentifizierungsabschnitt (11) einen Apparat (13 bis 15) identifiziert, welcher das Fluid verwendet oder die Leckage, und zwar basierend auf ob oder ob nicht die gemessene Flussratenwertdifferenz der gesamten Periode der Schwellenwert oder kleiner bzw. geringer ist.

3. Flussratenmessvorrichtung (16) nach Anspruch 1 oder 2, wobei die vorbestimmte Periode eine Periode von der Initiierung der Operation bzw. des Betriebes des Apparates (13 bis 15) bis zum Stoppen der Operation bzw. des Betriebes desselben ist.

4. Flussratenmessvorrichtung (16) nach irgendeinem der Ansprüche 1 bis 3, wobei die vorbestimmte Periode ein Abschnitt einer Periode von der Initiierung der Operation bzw. des Betriebes des Apparates (13 bis 15) bis zum Stoppen der Operation bzw. des Betriebes desselben ist.

5. Flussratenmessvorrichtung (16) nach Anspruch 1, weiter aufweisend:
einen Apparatoperationsstatusbestimmungsabschnitt, der einen Operationsstatus bzw. Betriebsstatus eines Apparates bestimmt, welcher das Fluid verwendet, indem bestimmt wird, ob oder ob nicht die gemessene Flussratenwertdifferenz ein vorbestimmter Schwellenwert oder kleiner bzw. geringer ist.

6. Fluidzuführsystem, das die Flussratenmessvorrichtung (16) nach irgendeinem der Ansprüche 1 bis 5 aufweist.

7. Flussratenmessverfahren, das aufweist:
einen Schritt des Messens einer Flussrate eines Fluids, das in einer Flusspassage (6) fließt;
einen Schritt des Speichems eines gemessenen Flussratenwertes;
einen Schritt des Berechnens einer gemessenen Flussratenwertdifferenz innerhalb einer vorbestimmten Periode, wobei
die gemessene Flussratenwertdifferenz einer Umfangsänderung bzw. Mengenänderung entspricht, die in bzw. bei einem gemessenen Flussratenwert stattfindet bzw. stattfand;
einen Schritt des Identifizierens eines Apparates (13 bis 15), welcher das Fluid verwendet oder eine Leckage, indem bestimmt wird ob oder ob nicht die gemessene Flussratenwertdifferenz ein vorbestimmter Schwellenwert oder kleiner bzw. geringer ist; und
Erreichen der gemessenen Flussratenwertdifferenz in der Mitte der stabilen Operation bzw. des stabilen Betriebes des Gasapparates (13 bis 15);
**dadurch gekennzeichnet, dass**:
die gemessene Flussratenwertdifferenz eine vorgemessene Flussratenwertdifferenz ist, die einer Umfangsänderung bzw. einer Mengenänderung entspricht, die in einem gemessenen Flussratenwert stattfindet bzw. stattfand, und zwar jedes Mal, wenn der Flussratenmessschritt durchgerührt wird; und
Identifizieren, in dem Schritt des Identifizierens eines Apparates (13 bis 15), einen Apparat (13 bis 15), welcher das Fluid verwendet oder eine Leckage, und zwar basierend auf einer integrierten Frequenz, bei welcher die vorgemessene Flussratenwertdifferenz der Schwellenwert oder kleiner bzw. geringer ist, wobei die integrierte Frequenz berechnet ist bzw. wird, und zwar mit entweder einer der beständigen bzw. fortwährenden Anzahl von Malen bzw. Zeiten bei denen ein vorgemessener Flussratenwertdifferenz kleiner bzw. geringer als der Schwellenwert ist, oder der Anzahl von Malen bzw. Zeiten von bzw. aus einer vorbestimmten Anzahl von Malen bzw. Zeiten bei denen ein vorgemessener Flussratenwert kleiner als der Schwellenwert ist, wobei die Anzahl durch einen Apparatidentifizierungsabschnitt erfasst wird.

8. Programm, das durch einen Computer verwendet wird, der eine Flussratenmessvorrichtung (16) steuert, um alle Schritte des Verfahrens nach Anspruch 7 auszuführen.

## Revendications

1. Appareil de mesure de débit (16) comprenant :
une section de mesure de débit (7) configurée pour mesurer un débit d'un fluide s'écoulant dans un passage d'écoulement (6) ;
une section de stockage d'informations de débit (8) configurée pour stocker une valeur de débit mesurée par la section de mesure de débit (7) ;
une section de calcul de différence de valeur de débit mesurée (9) configurée pour calculer une différence de valeur de débit mesurée dans une période prédéterminée, où
la différence de valeur de débit mesurée correspond à une quantité de changement produit de la valeur de débit mesurée ; et
une section d'identification d'appareil (11) permettant l'identification d'un appareil (13 à 15) qui utilise le fluide ou une fuite en configurant ladite section d'identification d'appareil (11) pour déterminer si la différence de valeur de débit mesurée est inférieure ou égale à un seuil prédéterminé ou non ;
dans lequel la différence de valeur de débit mesurée est obtenue au milieu du fonctionnement stable d'un appareil à gaz connectable (13 à 15) ;
**caractérisé en ce que** :
la différence de valeur de débit mesurée est une différence de valeur de débit par mesure correspondant à une quantité de changement produit d'une valeur de débit mesurée à chaque fois que la section de mesure de débit (7) effectue une mesure ; et
la section d'identification d'appareil (11) est configurée pour identifier un appareil (13 à 15) qui utilise le fluide ou une fuite sur la base d'une fréquence intégrée à laquelle la différence de valeur de débit par mesure est inférieure ou égale au seuil, où la fréquence intégrée est calculée par l'un du nombre continu de fois où une différence de valeur de débit par mesure est inférieure au seuil, ou du nombre de fois à partir d'un nombre prédéterminé de fois où une valeur de débit par mesure est inférieure au seuil, où le nombre est acquis par la section d'identification d'appareil (11).

2. Appareil de mesure de débit (16) selon la revendication 1, dans lequel la différence de valeur de débit mesurée est une différence de valeur de débit mesurée durant la période globale correspondant à une quantité de changement produit d'une valeur de débit mesurée durant la totalité de la période prédéterminée ; et
la section d'identification d'appareil (11) identifie un appareil (13 à 15) qui utilise le fluide ou une fuite sur la base de savoir si la différence de valeur de débit mesurée durant la période globale est inférieure ou égale au seuil ou non.

3. Appareil de mesure de débit (16) selon la revendication 1 ou 2, dans lequel la période prédéterminée est une période de démarrage du fonctionnement de l'appareil (13 à 15) jusqu'à l'arrêt du fonctionnement de celui-ci.

4. Appareil de mesure de débit (16) selon l'une quelconque des revendications 1 à 3, dans lequel la période prédéterminée est une partie d'une période de démarrage du fonctionnement de l'appareil (13 à 15) jusqu'à l'arrêt du fonctionnement de celui-ci.

5. Appareil de mesure de débit (16) selon la revendication 1, comprenant en outre :
une section de détermination d'état de fonctionnement d'appareil qui détermine un état de fonctionnement d'un appareil qui utilise le fluide, en déterminant si la différence de valeur de débit mesurée est inférieure ou égale à un seuil prédéterminé ou non.

6. Système d'alimentation en fluide comprenant l'appareil de mesure de débit (16) selon l'une quelconque des revendications 1 à 5.

7. Procédé de mesure de débit comprenant :
une étape qui consiste à mesurer un débit d'un fluide s'écoulant dans un passage d'écoulement (6) ;
une étape qui consiste à stocker une valeur de débit mesurée ;
une étape qui consiste à calculer une différence de valeur de débit mesurée dans une période prédéterminée, où
la différence de valeur de débit mesurée correspond à une quantité de changement produit d'une valeur de débit mesurée ;
une étape qui consiste à identifier un appareil (13 à 15) qui utilise le fluide ou une fuite en déterminant si la différence de valeur de débit mesurée est inférieure ou égale à un seuil prédéterminé ou non ; et
à atteindre la différence de valeur de débit mesurée au milieu du fonctionnement stable de l'appareil à gaz (13 à 15) ;
**caractérisé en ce que** :
la différence de valeur de débit mesurée est une différence de valeur de débit par mesure correspondant à une quantité de changement produit d'une valeur de débit mesurée à chaque fois que l'étape de mesure de débit est effectuée ; et
à identifier, dans l'étape d'identification d'un appareil (13 à 15), un appareil (13 à 15) qui utilise le fluide ou une fuite sur la base d'une fréquence intégrée à laquelle la différence de valeur de débit par mesure est inférieure ou égale au seuil, où la fréquence intégrée est calculée par l'un du nombre continu de fois où une différence de valeur de débit par mesure est inférieure au seuil, ou du nombre de fois à partir d'un nombre prédéterminé de fois où une valeur de débit par mesure est inférieure au seuil, où le nombre est acquis par une section d'identification d'appareil.

8. Programme étant utilisé par un ordinateur qui commande un appareil de mesure de débit (16) pour exécuter toutes les étapes du procédé selon la revendication 7.
